# EUROPEAN PATENT SPECIFICATION

(11) **EP 2 257 355 B1**
(45) Date of publication and mention of the grant of the patent: **11.01.2017**
(21) Application number: 09716970.0
(22) Date of filing: 25.02.2009
(51) Int. Cl.: B01D 15/08, G01N 30/34, G01N 1/38

(54) **SAMPLE DILUTION FOR CHROMATOGRAPHY OF MULTIPLE PROCESS STREAMS**
PROBENVERDÜNNUNG ZUR CHROMATOGRAPHIE MEHRERER PROZESSSTRÖME
DILUTION D'UN ÉCHANTILLON POUR ANALYSE CHROMATOGRAPHIQUE DE PLUSIEURS LIQUIDES À TRAITER

(30) Priority: 29.02.2008 US 32687 P
(43) Date of publication of application: 08.12.2010
(73) Proprietor: Waters Technologies Corporation, Milford, MA 01757 (US)
(72) Inventor: CORMIER, Sylvain, Mendon MA 01756 (US)
(74) Representative: Vossius, Corinna
(86) International application number: PCT/US2009/035049
(87) International publication number: WO 2009/111229

(56) References cited:
- EP-A1- 1 536 228
- WO-A1-2008/150763
- WO-A2-93/07168
- WO-A2-2008/036586
- US-A- 4 837 157
- US-A1- 2004 202 573
- US-A1- 2004 232 080
- US-A1- 2006 054 543
- US-A1- 2007 089 493

## Description

### RELATED APPLICATIONS

The application claims priority to U.S. Provisional Patent Application No. 61/032,687, filed February 29, 2008.

### TECHNICAL FIELD

The invention relates to chromatographic apparatus and methods, and, in particular, to apparatus and methods for dilution and mixing of chromatographic samples.

### BACKGROUND OF THE INVENTION

Liquid chromatography (LC) involves a separation process, which is utilized, for example, for chemical analysis or preparation. A typical LC system includes a mobile-phase pump, a sample injector, a column, and a detector. The column typically contains a stationary inert porous material, often composed of particles. The pump propels a mobile-phase fluid along a fluidic path that passes through the injector, column, and detector. The injector introduces a sample into the mobile-phase fluid prior to entry of the fluid into the column.

Typically, mobile-phase solvents are stored in reservoirs, and delivered as required via reciprocating-cylinder based pumps. Sample materials are often injected via syringe-type pumps. For example, some LC systems inject a sample by aspirating (pulling) a fluid-based sample into a tube via a needle or capillary and then pushing the sample into a sample loop. The sample is then injected from the sample loop into the mobile-phase stream on its way to a separation column.

Distinct chemical compounds contained in the fluid often have distinct affinities for the stationary material held in the column. Consequently, as the fluid moves through the chromatographic column, various chemical compounds are delayed in their transit through the column by varying amounts of time in response to their interaction with the stationary porous material in the column. As a result, as the compounds are carried through the medium, the compounds separate and elute from the column over different periods of time.

The different chemical compounds in a sample solution typically separate out as individual concentration peaks in the fluid eluting from the column. The various separated chemicals can be detected by, for example, a refractometer, an absorbtometer, or some other detecting device into which the fluid flows upon leaving the chromatographic column, such as a mass spectrometer.

LC has potential as a tool in support of Process Analytical Technology (PAT). PAT entails apparatus and methods that are employed in support of pharmaceutical manufacturing. A typical PAT system supports analysis and control of manufacturing through timely measurements (i.e., during processing) of critical quality and performance attributes of raw and in-process materials and processes with the goal of ensuring final product quality. The word "analytical", with respect to PAT tools, broadly relates to chemical, physical, microbiological, mathematical, and risk analysis conducted in an integrated manner.

In the PAT context, LC is used, for example, to determine when a desired reaction product, e.g., a drug, has begun to appear in a process stream, so that collection of the process stream may commence; LC is also used to determine when collection should cease. The effectiveness of LC analyses are limited, however, by the time delay between collection of a sample, and completion of analysis of the sample. This delay is related to the length of time required to collect a sample and the length of time required to analyze the sample. Typical LC equipment does not readily lend itself to PAT support, in part due to difficulty in interfacing the LC equipment to a compound-manufacturing process line.

The output flow of a pharmaceutical-manufacturing process, in some cases, is directed through plumbing that accommodates the time lag exhibited by analytical data. After detection of the appearance of the desired compound in the process stream, collection can commence from an appropriate location of the plumbing. Limits in sampling frequency and in speed of sample collection and analysis limit the accuracy in attempts to implement optimal collection of the desired portion of a process stream. Deviations from optimal collection are costly.

Moreover, a sample must often be diluted before injection into the mobile phase. For example, one may dilute a sample to reduce an injected sample load (e.g., picoliters) to avoid a mass overload condition for a particular chromatography column. Alternatively, a sample solution may contain a solvent that is incompatible with a column's stationary phase due to a physical property (e.g., pH level) of the solvent. Similarly, a sample solution may contain a strong solvent that interacts more efficiently with a column's stationary phase than does the sample material dissolved in the solution, leading to distortions in the separation of the sample material as it passes through the column.

A skilled technician can manually dilute a sample solution, however, manual dilution may be impractical and/or costly. In many instances, the technician and equipment for performing the dilution are located an inconvenient distance from the LC system. Significant delay can occur if the sample is transferred to a remote location for dilution, potentially resulting in manufacturing or processing downtime. Moreover, the additional inconvenience of tracking the transported sample is often necessary. In particular, such configuration and operation of an LC-based system does not lend itself to the speed and automation desirable for PAT-related manufacturing support.

### SUMMARY

The invention arises, in part, from the realization that an LC sample can be diluted during drawing of the sample from a sample source, using, for example, a single pump to draw and simultaneously mix both a sample and a diluent. A particular dilution ratio can be selected, for example, through use of a proportioning component, such as a proportioning valve, through which the sample and diluent are drawn.

Accordingly, in one aspect, the invention features a method of liquid chromatography according to claim 1. The method includes providing an injection valve, drawing a sample from a sample source, drawing a diluent from a diluent source, mixing - substantially while drawing - the sample and the diluent, pushing the mixed sample and diluent onto a sample loop of the injection valve, and injecting the mixed sample and diluent.

In another aspect, the invention features an analytical apparatus according to claim 9. The apparatus includes a proportioning unit, an injection valve having a sample loop, and a sample pump. The proportioning unit has a first inlet port, in fluidic communication with a sample source, a second inlet port, in fluidic communication with a diluent source, and an outlet port. The injection valve has a draw state and a load state, and has an inlet port in fluidic communication with the outlet port of the proportioning unit. The sample pump is in fluidic communication with the outlet port of the proportioning unit, if the injection valve is in the draw state, to draw both a sample from the sample source and a diluent from the diluent source through the proportioning unit and the injection valve, and in fluidic communication with the sample loop, if the injection valve is in the load state, to push the drawn sample and diluent onto the sample loop.

The apparatus and method support drug-manufacturing process monitoring and/or control through automated sample dilution, or other automated mixing-related processes.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention.
**FIG. 1** is a block diagram of a PAT tool and associated process lines supported by the PAT tool, in accordance with one embodiment of the invention;
**FIG. 2a** is a schematic diagram of an analytical apparatus, in accordance with one embodiment of the invention; and
**FIG. 2b** is an enlarged diagram of the injection valve illustrated in FIG. 2a.

### DETAILED DESCRIPTION

The term "in-line" herein refers to sample analysis of a process stream that occurs with little or no diversion of the process stream. For example, an in-line analysis optionally is accomplished by disposing a detector and/or related components in the flow path of a process stream.

The term "on-line" herein refers to sample analysis of a process stream that entails diversion of a portion of the process stream substantially directly to a chemical analysis device.

The term "at-line" herein refers to sample analysis of a process stream than entails diversion and collection of a portion of the process stream prior to analysis of the collected portion. Collection occurs either external to a particular analysis tool or internal to the tool. Collected portions are, for example, collected in sample vials. The terms in-line, on-line and at line are terms of convenience, and are not intended to be rigid; therefore, it will be understood that some overlap in these definitions may exist.

The word "chromatography" and the like herein refer to equipment and/or methods used to perform separation of chemical compounds. Chromatographic equipment typically moves fluids under pressure and/or electrical forces. The acronym "HPLC" (high-pressure or high-performance LC) is used herein generally to refer to liquid chromatography performed at pressures of approximately 1,000 to 2,000 psi or greater. "UHPLC" (ultra high-pressure or ultra-high-performance LC) is used herein generally to refer to liquid chromatography performed at pressures of up to approximately 15,000 to 20,000 psi or greater.

The term "sample loop" is used herein to refer broadly to any suitable container, vessel, conduit, or tube that temporarily holds a sample portion prior to injection and separation, including, for example, sample loops that are known to one having ordinary skill in HPLC and UHPLC.

The word "line" is used herein to refer to any suitable conduit that carries fluids in a chromatography system. Depending on application, suitable conduits include those formed from stainless steel tubing and fused-silica capillary tubing.

The word "column" herein refers to a vessel, including, for example, one or more tubes, within which separation of compounds occurs.

Preferred embodiments of the invention entail methods and apparatus that interface UHPLC components to multiple sample sources. The methods and apparatus are suited, for example, to support of PAT initiatives for monitoring and/or control of drug-manufacturing processes. The embodiments described below support on-line and/or at-line analyses.

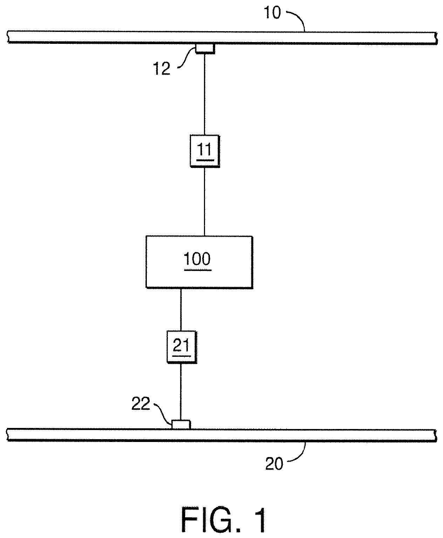

**FIG. 1** is a block diagram of an analytical apparatus **100** for monitoring one or more process streams in pharmaceutical manufacturing (shown supporting two process streams); the diagram also illustrates portions of two process lines **10, 20** (e.g., composed of stainless-steel tubes.) The process lines **10, 20** have associated ports **12, 22** to support diversion of portions of the associated process streams. Each port **12, 22** is plumbed to a respective valve **11, 21.** The valves **11, 21,** in turn, support interfacing to the apparatus **100** via additional plumbing.

Plumbing, ports and valves, in various embodiments of the invention, are any suitable components, including components known to one of ordinary skill in the LC arts. One of ordinary skill will understand that it is generally desirable to minimize the quantity of diverted material and the flow-path distance from a process line to an analyzer portion of an apparatus.

The apparatus **100** is optionally configured for on-line and/or for at-line analyses. For at-line support, the apparatus **100** includes components that collect samples and components that transport the collected samples to an analyzer portion of the apparatus **100.** The analyzer portion preferably provides relatively high-speed analyses in support of the rapid response desired in a typical pharmaceutical manufacturing setting. The apparatus **100** is optionally a modified version of an ACQUITY UPLC® chromatography apparatus (available from Waters Corporation, Milford, Massachusetts.)

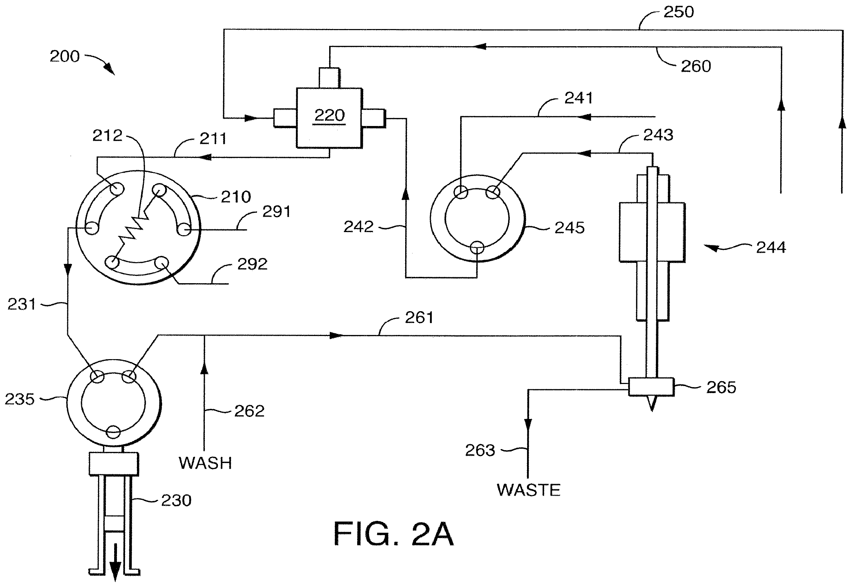

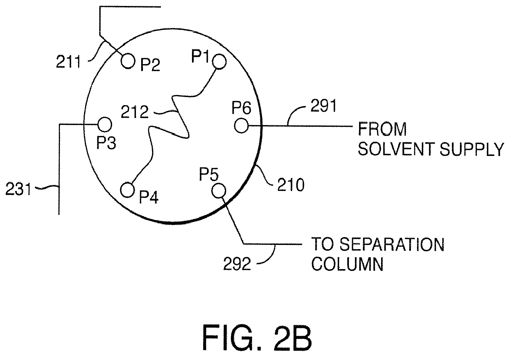

Next, an example of an apparatus and its operation are described in more detail. **FIG. 2a** is a schematic diagram of an analytical apparatus **200,** in accordance with one embodiment of the invention. The apparatus **200** includes an injection valve **210** having a sample loop **212** and six ports **P1-P6,** two selection valves **235, 245,** a pump **230,** a proportioning valve **220,** a sampling needle **242,** a needle-wash component **265,** a diluent source line **250,** a reagent source line **260,** a wash source line **262,** a waste line **263,** and various tubing lines **241, 242, 231, 211, 261, 291, 292** that support plumbing to fluidically connect the various components of the apparatus **200.** **FIG. 2b** is a diagram of the injection valve **210,** enlarged to illustrate the six ports **P1-P6.**

The selection valve **235** selectably connects the pump **230** to a port **P3** of the injection valve **210,** via line **231,** or to a line **261** that supports washing of the sampling needle **244.** The line **261** is connected to a wash-solution supply line **262** and to the needle-wash component **265;** the component **265,** in turn, is connected to a waste line **263.**

For needle washing, the sampling needle 244 is inserted in the needle-wash component **265,** which includes a needle wash seal. The selection valve **235** connects the pump **230** to the line **261.** The pump **230** draws a wash solution from the wash-solution supply line **262** and then pushes the wash solution into the needle **244** via the line **261** and the needle-wash component **265.**

The sample supply line **242** is connected to the second selection valve **245,** which permits selection of a desired source from which to draw a sample (i.e., from the sampling needle **244,** via a line **243,** or from a process line, via the line **241.)** Some alternative embodiments do not include a sample selection valve. For example, an apparatus is optionally dedicated to on-line or at-line analysis.

For at-line analyses, as will be understood by one of ordinary skill in the LC arts, the apparatus is optionally configured to collect process samples in vials; samples are then extracted from the vials, via the sampling needle **244,** for analyses.

The proportioning valve **220** has three inlet ports, each having an associated switching valve and connected, respectively, to the diluent supply line **250,** the reagent supply line **260,** and to the sample supply line **242.** The outlet port of the proportioning valve **220** is connected, via line **211,** to a port **P2** of the injection valve **210.** Alternative embodiments include proportion valves having more or fewer than three ports, or alternative proportioning components that serve to mix and/or mediate the flow of fluids along two or more supply lines.

The composition of fluid delivered to the output line **211** is determined by a timing sequence of the switching valves of the proportioning valve **220.** Thus, for example, a sample/diluent mixture of a desired ratio is obtained by drawing on the outlet line **211,** by the pump **230,** while appropriately opening and closing the switching valves associated with the inlet ports connected to the diluent supply line **250** and the sample supply line **242.** The proportions of sample and diluent in the mixture depend on the relative actuation time of the switches in relation to the fluid velocity profile provided by the pump **230.** The rate of opening and closing is optionally increased to promote mixing.

**FIG. 2a** depicts the injection valve **210** in a draw state. In this state, the pump **230** is used to draw a desired sample mixture, as mediated by the proportioning valve **220,** for subsequent loading onto the sample loop **212.** During drawing, the mixture is disposed adjacent to one of the ports **P2, P3** of the injection valve **210,** respectively without or with being drawn through the injection valve **210.**

For example, the mixture is drawn through the injection valve **210** until it resides entirely, or in part, in the line **231,** adjacent to the port **P3.** The mixture is then pushed, by the pump **230,** onto the sample loop **212,** after switching the injection valve **210** to a load state, as will be understood by one having ordinary skill in the chromatographic arts. Then injection valve **210** is then switched to an inject state to inject the loaded mixture into a solvent stream carried by the lines **291, 292,** for delivery to a separation column.

The apparatus **200** is thus configured to provide sample mixing at the time a sample is drawn. The injection valve **210** and the proportioning valve **220** cooperate to permit the sample pump **230** to substantially simultaneously draw two or more fluids to the injection valve **210** and to mix the fluids.

The sample pump **230** is selected from any suitable pumping devices, including known devices, such as a chromatographic metering syringe.

Preferably, reliance on pulling of a sample is minimized by, for example, optimized selection of tubing length and diameter. When pulling a sample, air pressure and tubing diameter are associated with a limit on flow rate; in effect, a vacuum pulls the sample, limited by ambient pressure, e.g., 14.7 psi. When pushing a sample, the pump **230** is able to apply much higher pressures, causing much higher flow rates.

As will be understood by one having ordinary skill in LC, the sample loop **212** receives the mixed sample for injection into an analysis stream for delivery to a separation column (not shown.) The tubes **291, 292** connect the process stream to the injection valve **210** via two ports **P5, P6.** One tube **292** carries a mobile phase, such as a solvent, to the injection valve **210;** after injection of a sample from the loop **212** into the mobile phase, the mobile phase and sample are delivered to the separation column via the other tube **291.** The injection valve **210** includes, for example, any multiport valve that is suitable for switchably connecting conduits in a chromatographic system.

The apparatus **200** is optionally implemented as a HPLC or UHPLC system. In these cases, the injection valve **210** is any suitable valve, including any suitable commercially available injection valve that supports sample loading and/or injection in a HPLC or UHPLC system. For example, the injection valve **210** is optionally a 6- or 10-port loop injection valve (available, for example, from Bio-Chem Valve/Omnifit, Booton, New Jersey.) In the illustrated example, the injection valve **210** is a six-port injection valve.

The sample loop **212** is any suitable sample-holding component, such as a sample loop known to one having ordinary skill in chromatography. For example, the sample loop **212** has any desired volume, for example, a fixed volume of 2, 5, 10, or 20 µl, or more, such as 250 µl.

As noted above, a sample is optionally diluted to reduce mass loading or to provide a compatible sample mixture composition. Dilution is also optionally used to permit analyses over a wider range of concentrations.

A reagent is optionally added, with or without a diluent, as desired for one or more of a variety of purposes. A reagent is added, for example, to a blank sample to create an external standard for calibration, or is added to an unknown sample for quantitation by internal standards or standard additions. Alternatively, for example, a reagent is added to modify a sample to allow separation or detection, to stop or start a reaction, or to denature a protein so that it exhibits suitable affinity for a column separation material.

Thus, the diluent line **250** and the reagent line **260** are each provide access to one or more diluent(s) and reagent(s) sources, which contain any solutions, as desired, to support analysis of manufacturing processes and apparatus monitoring. For example, reagent standards optionally have varying concentrations and/or varying compositions of desired materials. The materials optionally are associated with particular materials under manufacturing.

Various embodiments of the invention are configured and operated to provide increased efficiency in pharmaceutical manufacturing. These embodiments preferably include all or some of the following features: quick sampling of multiple manufacturing process streams, sampling of multiple standard sources, rapid LC analyses, and repeated frequent analyses of the sampled process streams and the standards. Desirably, an LC analysis portion of such embodiments utilizes UHPLC. Such an analysis portion performs a sample analysis in, for example, minutes rather than, for example, the half hour to an hour required by some prior systems.

With the above features, an apparatus can monitor manufacturing processes in close to a real-time manner and can collect data points spaced closely in time, for example, spaced by minutes or tens of minutes rather than by a half hour to an hour or more. Once a desired drug product begins to appear in a process stream, collection of the drug can commence with relatively accurate identification of the location of the drug in the stream. Similarly, the end of a product run is identified to permit accurate termination of collection. These features reduce the burden of holding the process stream in plumbing and tracking the location of the process stream as it proceeds while data analysis takes place with delay.

The apparatus **200** optionally includes a control unit that mediates its operation and supports automation of sample analyses. The control unit exchanges data and/or control signals via wired and/or wireless communications with, for example, the injection valve **210,** the selection valve **220,** and/or the pump **230.**

The control unit, in various alternative embodiments, includes software, firmware, and/or hardware (e.g., such as an application-specific integrated circuit), and includes, if desired, a user interface. The control unit is optionally configured to implement the above-described sampling and monitoring processes described above.

Program code (or software) of the present invention is optionally embodied as computer-executable instructions on or in one or more articles of manufacture, or in or on computer-readable medium or media. Hence, the control unit, such as a computer, computing system or computer system, as used herein, is any programmable machine or device that inputs instructions and data, processes, and outputs, commands, or data. In general, any standard or proprietary, programming or interpretive language can be used to produce the computer-executable instructions. Examples of such languages include C, C++, Pascal, LAVA, BASIC, Visual Basic, and Visual C++.

Examples of articles of manufacture and computer-readable media in which the computer-executable instructions may be embodied include, but are not limited to, a floppy disk, a hard-disk drive, a CD-ROM, a DVD-ROM, a flash-memory card, a USB flash drive, a non-volatile RAM (NVRAM or NOVRAM), a flash PROM, an EEPROM, an EPROM, a PROM, a RAM, a ROM, a magnetic tape, or any combination thereof. The computer-executable instructions may be software as, e.g., source code, object code, interpretive code, executable code, or combinations thereof. Further, methods in accordance with at least some embodiments of the invention may be implemented in hardware (digital or analog), software, or a combination thereof.

In view of the description provided herein, one having ordinary skill in the chromatographic arts will recognize that various embodiments of the invention are not limited to specific features described above. Variations, modifications, and other implementations of what is described herein will occur to those of ordinary skill in the art without departing from the scope of the invention as claimed. Accordingly, the invention is to be defined not by the preceding illustrative description but instead by the following claims.

## Claims

1. A method of liquid chromatography, comprising:
providing an injection valve (210) comprising a sample loop (212);
drawing a sample from a sample source (242);
drawing a diluent from a diluent source (250);
diluting the sample during drawing of the sample from the sample source (242), by drawing and simultaneously mixing both the sample and the diluent;
pushing the mixed sample and diluent onto the sample loop (212); and
injecting the mixed sample and diluent from the sample loop (212) into a solvent stream (291, 292) for delivery to a separation column.

2. The method of claim 1, further comprising drawing the mixed sample and diluent through the injection valve (210) prior to pushing the mixed sample and diluent onto the sample loop (212).

3. The method of claim 1, wherein drawing the sample comprises drawing the sample with a syringe (230), and drawing the diluent comprises drawing the diluent with the syringe (230).

4. The method of claim 3, wherein pushing comprises pushing with the syringe (230).

5. The method of claim 1, wherein drawing the sample and the diluent comprise alternately drawing portions of the sample and portions of the diluent, and mixing comprises delivering the alternately drawn portions to a tube (211) that is in fluid communication with the injection valve (210).

6. The method of claim 1, wherein drawing the sample comprises drawing a predetermined amount of the sample and drawing the diluent comprises drawing a predetermined amount of the diluent, to provide a selected dilution ratio.

7. The method of claim 1, further comprising drawing a reagent from a reagent source (260), wherein mixing further comprises mixing, substantially while drawing, the sample, the diluent and the reagent.

8. The method of claim 1, wherein the diluent comprises a standard.

9. An analytical apparatus for dilution and mixing of chromatographic samples, comprising:
a proportioning unit (220) having a first inlet port, in fluidic communication with a sample source (242), a second inlet port, in fluidic communication with a diluent source (250), and an outlet port;
an injection valve (210) comprising a sample loop (212), and having a draw state and a load state, and having an inlet port (P2) in fluidic communication with the outlet port of the proportioning unit (220); and
a sample pump (230) in fluidic communication with the outlet port of the proportioning unit (220), if the injection valve (210) is in the draw state, to draw both a sample from the sample source (242) and a diluent from the diluent source (250) through the proportioning unit (220) and the injection valve (210), and in fluidic communication with the sample loop (212), if the injection valve (210) is in the load state, to push the drawn sample and diluent onto the sample loop (212), wherein the sample is diluted during drawing of the sample from the sample source (242), using the sample pump (230) to draw and simultaneously mix both the sample and the diluent.

10. The apparatus of claim 9, wherein the proportioning unit (220) comprises a proportioning valve (220).

11. The apparatus of claim 9, wherein the sample pump (230) consists of a single syringe.

12. The apparatus of claim 9, wherein the proportioning unit (220) further comprises a third inlet port, in fluidic communication with a reagent source (260) or a standard source.

13. The apparatus of claim 9, wherein the sample source (242) comprises means for selecting an on-line sample or an at-line sample.

14. The apparatus of claim 13, further comprising means for controlling the injection valve (210), the selection valve (220) and the sample pump (230).

## Patentansprüche

1. Verfahren für die Flüssigchromatographie, umfassend:
Bereitstellen eines Injektionsventils (201) mit einer Probenschleife (212);
Ziehen einer Probe aus einer Probenquelle (242);
Ziehen eines Verdünnungsmittels aus einer Verdünnungsmittelquelle (250);
Verdünnen der Probe, während die Probe aus der Probenquelle (242) gezogen wird, und zwar durch Ziehen und gleichzeitigem Mischen der Probe mit dem Verdünnungsmittel;
Schieben des Proben-Verdünnungsmittel-Gemisches auf die Probenschleife (212); und
Injizieren des Proben-Verdünnungsmittel-Gemisches von der Probenschleife (212) in einen Lösungsmittelstrom (291, 292) zur Beschickung einer Trennsäule.

2. Verfahren nach Anspruch 1, das ferner das Ziehen des Proben-Verdünnungsmittel-Gemisches durch das Injektionsventil (210) umfasst, bevor das Proben-Verdünnungsmittel-Gemisch auf die Probenschleife (212) geschoben wird.

3. Verfahren nach Anspruch 1, wobei das Ziehen der Probe das Ziehen der Probe mit einer Spritze (230) umfasst und das Ziehen des Verdünnungsmittels das Ziehen des Verdünnungsmittels mit der Spritze (230) umfasst.

4. Verfahren nach Anspruch 3, wobei das Schieben ein Schieben mit der Spritze (230) umfasst.

5. Verfahren nach Anspruch 1, wobei das Ziehen der Probe und des Verdünnungsmittels das abwechselnde Ziehen von Abschnitten der Probe und des Verdünnungsmittels umfasst und das Mischen das Zuführen der abwechselnd gezogenen Abschnitte in ein Rohr (211) umfasst, das in fluider Kommunikation mit dem Injektionsventil (210) steht.

6. Verfahren nach Anspruch 1, wobei das Ziehen der Probe das Ziehen einer vorbestimmten Menge der Probe umfasst und das Ziehen des Verdünnungsmittels das Ziehen einer vorbestimmten Menge des Verdünnungsmittels umfasst, um ein ausgewähltes Verdünnungsverhältnis bereit-zustellen.

7. Verfahren nach Anspruch 1, das ferner das Ziehen eines Reagenz aus einer Reagenzquelle (260) umfasst, wobei das Mischen ferner ein Mischen umfasst, das im Wesentlichen während des Ziehens der Probe, des Verdünnungsmittels und des Reagenz erfolgt.

8. Verfahren nach Anspruch 1, wobei das Verdünnungsmittel einen Standard umfasst.

9. Analysevorrichtung zum Verdünnen und Mischen von chromatographischen Proben, umfassend:
eine Dosiereinheit (220) mit einer ersten Einlassöffnung in fluidischer Kommunikation mit einer Probenquelle (242), eine zweite Einlassöffnung in fluidischer Kommunikation mit einer Verdünnungsmittelquelle (250), und eine Auslassöffnung;
ein Injektionsventil (210) mit einer Probenschleife (212) und einem Ziehstatus und einem Beladungsstatus und einer Einlassöffnung (P2) in fluidischer Kommunikation mit der Auslassöffnung der Dosiereinheit (220); und
eine Probenpumpe (230), die in fluidischer Kommunikation mit der Auslassöffnung der Dosiereinheit (220) steht, um, wenn das Injektionsventil (210) im Ziehstatus ist, sowohl eine Probe aus der Probenquelle (242) als auch ein Verdünnungsmittel aus der Verdünnungsmittelquelle (250) durch die Dosiereinheit (220) und das Injektionsventil (210) zu ziehen, und in fluidischer Kommunikation mit der Probenschleife (212) steht, und um, wenn das Injektionsventil (210) im Beladungsstatus ist, die gezogene Probe und das Verdünnungsmittel auf die Probenschleife (212) zu schieben, wobei die Probe während ihres Ziehens aus der Probenquelle (242) verdünnt wird, und zwar unter Verwendung der Probenpumpe (230), um die Probe und das Verdünnungsmittel gleichzeitig zu ziehen und zu mischen.

10. Vorrichtung nach Anspruch 9, wobei die Dosiereinheit (220) ein Dosierventil (220) umfasst.

11. Vorrichtung nach Anspruch 9, wobei die Probenpumpe (230) aus einer einzigen Spritze besteht.

12. Vorrichtung nach Anspruch 9, wobei die Dosiereinheit (220) ferner eine dritte Einlassöffnung umfasst, die in fluidischer Kommunikation mit einer Reagenzquelle (260) oder einer Standardquelle steht.

13. Vorrichtung nach Anspruch 9, wobei die Probenquelle (242) eine Einrichtung zum Auswählen einer on-line-Probe oder einer at-line-Probe umfasst.

14. Vorrichtung nach Anspruch 13, die ferner eine Einrichtung zur Steuerung des Injektionsventils (210), des Auswahlventils (220) und der Probenpumpe (230) umfasst.

## Revendications

1. Procédé d'analyse chromatographique liquide comprenant les étapes consistant à :
fournir une vanne d'injection (210) comprenant une boucle d'échantillonnage (212),
prélever un échantillon à partir d'une source d'échantillon (242),
prélever un diluant depuis une source de diluant (250),
diluer l'échantillon pendant le prélèvement de l'échantillon de la source d'échantillon (242), en prélevant l'échantillon et le diluant et en les mélangeant simultanément,
pousser l'échantillon et le diluant mélangés sur la boucle d'échantillonnage (212), et
injecter l'échantillon et le diluant mélangés depuis la boucle d'échantillonnage (212) dans un flux de solvant (291, 292) pour l'acheminer jusqu'à une colonne de séparation.

2. Procédé selon la revendication 1, comprenant en plus une étape consistant à prélever l'échantillon et le diluant mélangés via la vanne d'injection (210) avant de pousser l'échantillon et le diluant mélangés sur la boucle d'échantillonnage (212).

3. Procédé selon la revendication 1, dans lequel l'étape de prélèvement de l'échantillon consiste à prélever l'échantillon avec une seringue (230), et l'étape de prélèvement du diluant consiste à prélever le diluant à l'aide d'une seringue (230).

4. Procédé selon la revendication 3, dans lequel l'étape de poussée consiste à effectuer la poussée avec la seringue (230).

5. Procédé selon la revendication 1, dans lequel l'étape consistant à prélever l'échantillon et le diluant consiste à prélever alternativement des parties de l'échantillon et des parties du diluant, et l'étape de mélange consiste à acheminer les parties prélevées alternativement jusqu'à un tube (211) qui est en communication fluidique avec la vanne d'injection (210).

6. Procédé selon la revendication 1, dans lequel l'étape de prélèvement de l'échantillon consiste à prélever une quantité prédéterminée de l'échantillon et l'étape de prélèvement du diluant consiste à prélever une quantité prédéterminée du diluant, afin de procurer un rapport de dilution sélectionné.

7. Procédé selon la revendication 1, comprenant en plus une étape consistant à prélever un réactif à partir d'une source de réactif (260), dans lequel l'opération de mélange consiste en plus à mélanger essentiellement l'échantillon, le diluant et le réactif tout en les prélevant.

8. Procédé selon la revendication 1, dans lequel le diluant comprend un étalon.

9. Appareil d'analyse permettant de diluer et mélanger des échantillons chromatographiques, comprenant :
un module de dosage (220) comportant un premier orifice d'entrée, en communication fluidique avec une source d'échantillon (242), un second orifice d'entrée en communication fluidique avec une source de diluant (250), et un orifice de sortie,
une vanne d'injection (210) comprenant une boucle d'échantillonnage (212) et comportant une position de prélèvement et une position de charge, et possédant un orifice d'entrée (P2) en communication fluidique avec l'orifice de sortie du module de dosage (220), et
une pompe de prélèvement (230) en communication fluidique avec le port de sortie du module de dosage (220), si la vanne d'injection (210) est en position de prélèvement, pour prélever à la fois un échantillon depuis la source d'échantillon (242) et un diluant depuis la source de diluant (250) par l'intermédiaire du module de dosage (220) et de la vanne d'injection (210), et en communication fluidique avec la boucle d'échantillonnage (212), si la vanne d'injection (210) est en position de charge, pour pousser l'échantillon et le diluant prélevés sur la boucle d'échantillonnage (212), l'échantillon étant dilué pendant le prélèvement de l'échantillon depuis la source d'échantillon (242), en utilisant la pompe de prélèvement (230) pour prélever et mélanger simultanément l'échantillon et le diluant.

10. Appareil selon la revendication 9, dans lequel le module de dosage (220) comprend une vanne de dosage (220).

11. Appareil selon la revendication 9, dans lequel la pompe de prélèvement (230) est composée d'une seule seringue.

12. Appareil selon la revendication 9, dans lequel le module de dosage (220) comprend en plus un troisième orifice d'entrée, en communication fluidique avec une source de réactif (260) ou une source d'étalon.

13. Appareil selon la revendication 9, dans lequel la source d'échantillon (242) comprend des moyens pour sélectionner un échantillon en ligne ou un échantillon à proximité de la ligne.

14. Appareil selon la revendication 13, comprenant en plus des moyens pour commander la vanne d'injection (210), la vanne de sélection (220) et la pompe de prélèvement (230).
